Europäisches Patentamt

European Patent Office

Office européen des brevets

(19)

(11) Veröffentlichungsnummer: **0 017 888**
**B1**

(12) **EUROPÄISCHE PATENTSCHRIFT**

(45) Veröffentlichungstag der Patentschrift: **22.06.83**

(51) Int. Cl.³: **C 02 F 3/10, A 01 K 63/04**

(21) Anmeldenummer: **80101850.8**

(22) Anmeldetag: **08.04.80**

(54) **Verfahren und Vorrichtung zum Entfernen von Eiweiss und dessen Abbauprodukten aus Wasser.**

(30) Priorität: **12.04.79 DE 2914976**

(43) Veröffentlichungstag der Anmeldung:
**29.10.80 Patentblatt 80/22**

(45) Bekanntmachung des Hinweises auf die Patenterteilung:
**22.06.83 Patentblatt 83/25**

(84) Benannte Vertragsstaaten:
**AT BE CH DE FR GB IT LI LU NL SE**

(56) Entgegenhaltungen:
**DE - A - 2 725 510**
**GB - A - 1 366 528**
**US - A - 3 387 587**
**US - A - 3 835 813**
**US - A - 3 957 017**
**US - A - 4 043 299**

**B. VOLLMERT: "Grundriss der Makromolekularen Chemie". 1962, Springer-Verlag, Berlin-Göttingen-Heidelberg, DE.**

(73) Patentinhaber: **Hofmann, Gunter**
**Mönchsheide 5**
**D-5063 Overath (DE)**

(72) Erfinder: **Hofmann, Kurt Helmut**
**D-5063 Overath-Eulenthal (DE)**

(74) Vertreter: **Patentanwälte Dipl.-Ing. W. Dahlke**
**Dipl.-Ing. H.-J. Lippert**
**Frankenforster Strasse 137**
**D-5060 Bergisch Gladbach 3 (DE)**

Courier Press, Leamington Spa, England.

## Verfahren und Vorrichtung zum Entfernen von Eiweiß und dessen Abbauprodukten aus Wasser

Eiweiß und dessen Abbauprodukte, wie NH$_4$, NO$_2$ und NO$_3$, können durch Abwässer, Fäkalien Tierfuttermittel. Düngemittel und dergleichen in Wassersammelstellen, wie beispielsweise Trinkwassertalsperren, Fischteiche usw., gelangen. Die Eiweißabbauprodukte, die teilweise giftig sind, könne, zu Gesundheitsschädigungen bei Mensch und Tier führen. Besonders in Aquarien und sonstigen Fischzuchtbehältern wirken sich die Eiweißabbaustoffe sehr šohädigend un teilweise sogar tödlich auf die Fische und die ebenfalls in dem Wasser befindlichen niederen Tiere aus.

In der Seewasser-Aquaristik kann mit sich mit sogenannten Eiweißabschäumern behelfen. Durch sehr starke, feinperlige Luftzufuhr kann aus dem Wasser ein Teil des Eiweißes, das sich laufend durch Futterreste, Exkremente usw. bildet, ausgeschäumt werden. Der Schaum wird dann in Auffangbehälter geleitet und kann somit dem Aquarium entzogen werden, bevor sich das Eiweiß in seine schädlichen Abbauprodukte umsetzen kann.

In der Süßwasseraquaristik funktioniert diese Methode nicht. Die einzige Möglichkeit, das Süßwasser in Aquarien funktionstüchtig zu halten, ist die Einhaltung des biologischen Gleichgewichtes, unterstützt durch einen in bestimmten Zeitabständen vorzunehmenden teilweisen Wasserwechsel.

Aus der US—A—3 957 017 ist ein Verfahren bekannt, bei dem das zu reunigende Wasser durch einen Filter aus offenzelligem Polyurethanschaum geleitet wird. In diesem Filter werden die Eiweißabbauprodukte Ammonium und Nitrite in Nitrate übergeführt. Die Entfernung der ebenfalls schädlichen Nitrate aus dem Wasser ist nach diesem bekannten Verfahren nicht möglich.

Aus der DE—A—27 25 510 ist ein Filterverfahren bekannt, bei dem das Filtrationsmedium aus inertem Material mit einem Belag aus granularem Material, beispielsweise Aktivkohle oder Sand, besteht. Auf den Oberflächen dieses Materials sollen sich Mikroorganismen festsetzen, die eine Verringerung des biologischen Sauerstoffbedarfs des zu reinigenden Wassers bewirken.

Aus der GB—A—1 366 528 ist ein Filterverfahren bekannt, bei dem als Filtermaterial Lavaschlacke, Mineralien oder PVC-Material verwendet werden kann. Von einem Entfernen von Eiweiß und dessen Abbauprodukten aus dem Wasser ist in dieser Entgegenhaltung jedoch nicht die Rede.

Der Erfindung liegt die Aufgabe zugrunde, ein Verfahren zu schaffen, Eiweiß und seine Abbauprodukte mit geringem Aufwand aus Wasser, insbesondere aus Trinkwasser, Aquarienwasser und dergleichen, zu entfernen.

Erfindungsgemäß wird diese Aufgabe dadurch gelöst, daß mit dem zu reinigenden Wasser ein mit einer großen Kontaktfläche versehenes Kontaktmaterial aus Phthalsäureester enthaltendem Kunststoff umspült wird und daß das Kontaktmaterial nach bestimmten Zeitabständen gereinigt bzw. durch neues Material ausgetauscht wird.

Das erfindungsgemäße Verfahren bedient sich dabei des Phänomens, daß bestimmte Bakterien Eiweiße und deren Abbauprodukte an sich binden und in sich aufnehmen. Bei Anwendung des erfindungsgemäßen Verfahrens bildet das mit der großen Kontaktfläche versehene Kontaktmaterial ein Substrat, auf dem sich die sogenannten nitrifizierenden Bakterien, die in geringen Mengen in jedem Wasser enthalten sind, ansiedeln und explosionsartig vermehren. Die Bakterien nehmen dabei sowohl das Eiweiß als auch dessen Abbauprodukte in sich auf und überführen diese Stoffe in Bakterienmasse. Das Kontaktmaterial wird dann nach bestimmten Zeitabständen gereinigt, indem die abgestorbenen bzw. überflüssigen Bakterien ausgewaschen werden. Das entnommene Kontaktmaterial kann dann durch gereinigtes Kontaktmaterial bzw. frisches Kontaktmaterial ersetzt werden.

Als Kontaktmaterial wird vorzugsweise Phthalsäure-ester enthaltendes PVC verwendet. Zur Steigerung seiner Wirksamkeit kann diesem Polyäthylen und/oder Kieselgur und/oder Filterkohlepulver beigemischt werden.

Vorzugsweise wird das Kontaktmaterial in Form eines Granulats verwendet. Dadurch wird eine große Ansiedlungsfläche für die nitrifizierenden Bakterien sowie eine große Kontaktfläche für das zu reinigende Wasser geschaffen.

Da die nitrifizierenden Bakterien große Mengen Sauerstoff benötigen, ist anzustreben, daß alle Teilchen des Kontaktmaterials von einer ausreichenden Menge des Wassers umspült werden. Die Granulatteilchen weisen daher zweckmäßig eine unregelmäßig geformte Gestalt auf, wodurch gewährleistet ist, daß ausreichende Zwischenräume zwischen den Granulatteilchen zum Hindurchfließen des Wassers vorhanden sind. Ferner können die Granulatteilchen eine aufgerauhte Oberfläche aufweisen, wodurch die Wirksamkeit des Verfahrens noch erhöht werden kann.

Eine Vorrichtung zur Durchführung des Verfahrens, die sich insbesondere zum Reinigen von Aquarienwasser eignet, umfaßt ein von dem zu reinigenden Wasser durchströmbares Aufnahmegefäß, das zumindest teilweise mit Kontaktmaterial gefüllt ist.

Damit das mit dem Kontaktmaterial gefüllte Behältnis nicht unnötig durch Schwebeteilchen und sonstige größere Verunreinigungspartikel belastet wird, kann diesem ein Filter vorgeschaltet sein.

Um das Kontaktmaterial problemlos und schnell reinigen zu können, können der Aufnahmebehälter sowie der Filter in einen geschlossenen Kreislauf geschaltet werden. Das Wasser wird dann eine Zeit lang durch diesen geschlossenen Kreislauf gepumpt, wobei die an dem Kontaktmaterial festgesetzten Verunreinigungen von dem Kontaktmaterial abgespült und dann ausgefiltert werden können.

Zumindest in der Schaltstellung, bei welcher das Aufnahmegefäß mit dem Filter in einem geschlossenen Kreislauf liegt, ist der Wassereinlaß des Aufnahmegefäßes in seinem Boden vorgesehen, damit der Spülvorgang möglichst intensiv ist.

Eine Vorrichtung zur Durchführung des erfindungsgemäßen Verfahrens kann in Abhängigkeit von dem jeweiligen Anwendungsfall sehr unterschiedlich gestaltet sein. Um zum Beispiel aus Trinkwasserbecken das Eiweiß und dessen Abbauprodukt herauszubekommen, kann die Vorrichtung als Tauchkörper ausgebildet sein, der zumindest an seiner Oberfläche aus Phthalsäureester enthaltendem Kunststoff besteht. Der Tauchkörper hat dabei zweckmäßig eine große Oberfläche, damit eine ausreichende Wirksamkeit gegeben ist. Die Oberfläche kann durch Hohlteile, Stäbe, Geflechte, Gitter usw. sowie zusätzlich durch eine Oberflächenrauhigkeit ausreichend groß gestaltet werden.

Die Erfindung ist in der Zeichnung beispielsweise veranschaulicht und im nachstehenden im einzelnen anhand der Zeichnung beschrieben. Es zeigen:

Fig. 1 eine insbesondere zur Reinigung von Aquarienwasser dienende Vorrichtung und

Fig. 2 dieselbe Vorrichtung wie in Fig. 1 im Schaltzustand der Rückspülung.

Nach der Zeichnung besteht die Reinigungsvorrichtung aus einem Aufnahmegefäß 1, das granulatförmiges Kontaktmaterial 2 enthält, sowie einem Motorfilter 3.

Das zu reinigende Wasser wird über eine Leitung 4 aus einem Aquarium 5 in den mechanischen Filter 3 gesaugt, und von dort aus gelangt das vorgefilterte Wasser über eine Zwischenleitung 6 in das Aufnahmegefäß 1, von wo aus es nach Umspülung des Kontaktmaterials 2 über eine Auslaßleitung 7 gereinigt in das Aquarium 5 zurückgelangt.

Der Motorfilter 3 besteht aus einem allseits geschlossenen, becherförmigen Gefäß 8, das an seiner Oberseite einen mit der Ansaugleitung 4 verbundenen Ansaugstutzen 9 sowie einen mit der Zwischenleitung 6 verbundenen Auslaßstutzen 10 aufweist. In seinem Inneren weist das becherförmige Gefäß ein mit Durchgangsöffnungen versehenes, konzentrisch angeordnetes Wellrohr 11 auf, das von einem Mantel 12 aus Schaumstoff umgeben ist. In der Mitte des Wellrohrs 11 ist ein koaxial verlaufendes dünnes perforiertes Steigrohr 13 gehalten, dessen oberes Ende mit dem Sauganschluß 14 einer Kreiselpumpe 15 verbunden ist, die durch einen auf der Oberseite des becherförmigen Gefäße 8 befestigten Motor 16 angetrieben wird. Das Druckende der Pumpe 15 mündet in den Auslaßstutzen 10 des Gefäßes 8.

Das durch den Ansaugstutzen 9 in das becherförmige Filtergefäß 8 eintretende Wasser verteilt sich über den gesamten Gefäßumfang und dringt durch den Schaumstoffmantel und die Ausnehmungen in dem Wellrohr 11 in den Zwischenraum zwischen dem Wellrohr 11 und dem Steigrohr 73 ein. Dieser Zwischenraum ist mit Filtermaterial 17 gefüllt. Nach dem Durchtritt durch das Filtermaterial 17 gelangt das mechanisch ausgefilterte Wasser durch die Perforierungen in das Innere des Steigrohrs 13 und wird von dort in das Gehäuse der Kreiselpumpe 15 gesaugt und dann über den Auslaßstutzen 10 und die Zwischenleitung 6 in das mit dem Kontaktmaterial 2 gefüllte Aufnahmegefäß 1 gedrückt.

Das Aufnahmegefäß 1 besteht in gleicher Weise wie der Motorfilter 3 aus einem aufrechtstehenden, geschlossenen becherförmigen Gefäß 18, das an seiner Oberseite einen mit der Zwischenleitung 6 verbundenen Einlaßstutzen 19 und einen mit der Auslaßleitung 7 verbundenen Auslaßstutzen 20 aufweist. Im Inneren des Gefäßes 18 ist in konzentrischer Anordnung ein Wellrohr 21 angeordnet, das über seine gesamte Höhe mit Durchbrüchen 22 versehen ist. Im Inneren des Wellrohrs ist ein dünnes, perforiertes Steigrohr 23 in zentrischer Anordnung gehalten, dessen unteres Ende mit einer Kappe 24 verschlossen ist, während das obere Ende über einen Anschluß 25 mit dem Auslaßstutzen 20 in Verbindung steht. Der Zwischenraum 26 zwischen dem Wellrohr 21 und dem inneren Steigrohr 13 ist bis etwa zu 60 bis 70% seiner Höhe mit dem Kontaktmaterial 2 ausgefüllt. Dieses besteht aus einem unregelmäßig geformten Granulat mit einer Korngröße zwischen 2 und 5 mm, wobei die Oberfläche der Granulatkörner aufgerauht ist. Das Granulat besteht im wesentlichen aus Phthalsäureester enthaltendem PVC, Polyäthylen, Kieselgur und Filterkohlepulver beigemischt ist.

Das in dem Motorfilter 3 vorgefilterte, durch den Einlaßstutzen 19 in das becherförmige Gefäß 18 gelangende Wasser verteilt sich über den gesamten Umfang und die gesamte Höhe des zwischen der Wandung des Gefäßes 18 und dem Wellrohr 21 gebildeten Zwischenraums und tritt durch die Ausnehmungen 22 in den Innenraum 26 ein. Dort kommt es mit dem Kontaktmaterial 2 in Berührung und gibt sein mitgeführtes Eiweiß sowie dessen Abbauprodukte an das Kontaktmaterial ab. Das gereinigte Wasser tritt dann durch die Perforation des Steigrohres 23, die sich bis etwa zum Niveau der Füllhöhe hinauferstreckt, in das Innere des Steigrohres 23 und wird dann über das Verbindungsstück 25, den Auslaßstutzen 19 und die Auslaßleitung 7 in das Aquarium zurückgeführt.

Während der Motorfilter 3 rein mechanisch arbeitet und nur die in dem Wasser enthaltenen Schwebeteilchen zurückhält, geht in dem mit dem Kontaktmaterial 2 gefüllten Aufnahmegefäß ein biologischer Vorgang vor sich. Auf dem Kontaktmaterial siedeln sich sehr schnell die in jedem Wasser enthaltenden nitrifizierenden Bakterien an, deren Leistung auf dem Kontaktmaterial erheblich aktiviert wird, so daß sie sich innerhalb kurzer Zeit stark vermehren und in einem relativ kleinen Zeitraum nahezu die gesamten Eiweißbestandteile sowie deren Abbauprodukte aus dem Filterwasser an sich binden und in sich aufnehmen.

Je nach dem Verschmutzungsgrad des Filterwassers muß das Kontaktmaterial von Zeit zu Zeit gereinigt werden, und zwar müssen die abgestorbenen bzw. die überschüssigen Bakterien sowie die ausgefällten Eiweißstoffe entfernt werden. Zu diesem Zweck weist die Vorrichtung eine Rückspülmöglichkeit auf. Von der Zwischenleitung 6 führt eine Rückspülleitung 27 in den unteren Teil des Aufnahmegefäßes 1 und mündet in einen Zwischenboden 28, dessen Oberseite über ein Sieb 29 mit dem Kontaktmaterial 2 gefüllten Zwischenraum 26 zwischen dem Wellrohr 21 und dem Steigrohr 23 in Verbindung steht. Für den Rückspülvorgang weist das Aufnahmegefäß ferner einen zweiten, unmittelbar neben dem Einlaßstutzen 19 angeordneten Auslaßstutzen 30 auf, der über eine Rückspüll-zwischenleitung 31 mit der Ansaugleitung 4 verbunden ist.

Um jeweils den Reinigungsvorgang bzw. den Rückspülvorgang steuern zu können, sind fünf Absperrventile vorgesehen. Ein Absperrventil 32 sitzt in der Ansaugleitung, und zwar zwischen dem Ansaugende 33 und dem Anschluß 34 der Leitung 31. Ein zweites Ventil 35 befindet sich in der Zwischenleitung 6, und zwar zwischen dem Ansaugstutzen 19 des Aufnhamegefäßes 1 und dem Anschlußstück 36 der Rückspülleitung 27. An drittes Absperrventil 37 sitzt in der Rückspülleitung 27, ein viertes Absperrventil 38 in der Leitung 31 und ein fünftes Absperrventil 39 in der Auslaßleitung 7.

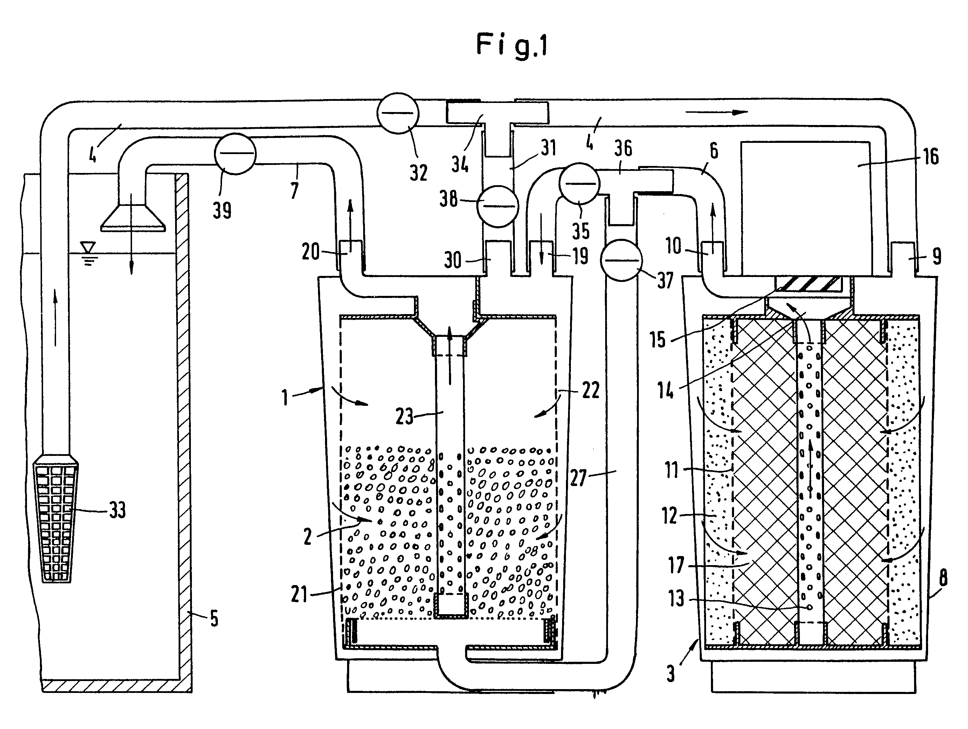

Bei dem in Fig. 1 dargestellten Betriebszustand soll das Filterwasser gereinigt werden, d.h. es soll aus dem Aquarium entnommen und nach dem Durchlauf durch den Motorfilter 3 und das Aufnahmegefäß 1 wieder in das Aquarium zurückgeführt werden. Hierbei sind die Ventile 32, 35 und 39 geöffnet, während die beiden Ventile 37 und 38 des Rückspülkreislaufes geschlossen sind. Das Filterwasser kann also in diesem Betriebszustand nacheinander den Motorfilter 3 und das Aufnahmegefäß 1 durchlaufen und über die Auslaßleitung 7 zurück in das Aquarium geführt werden.

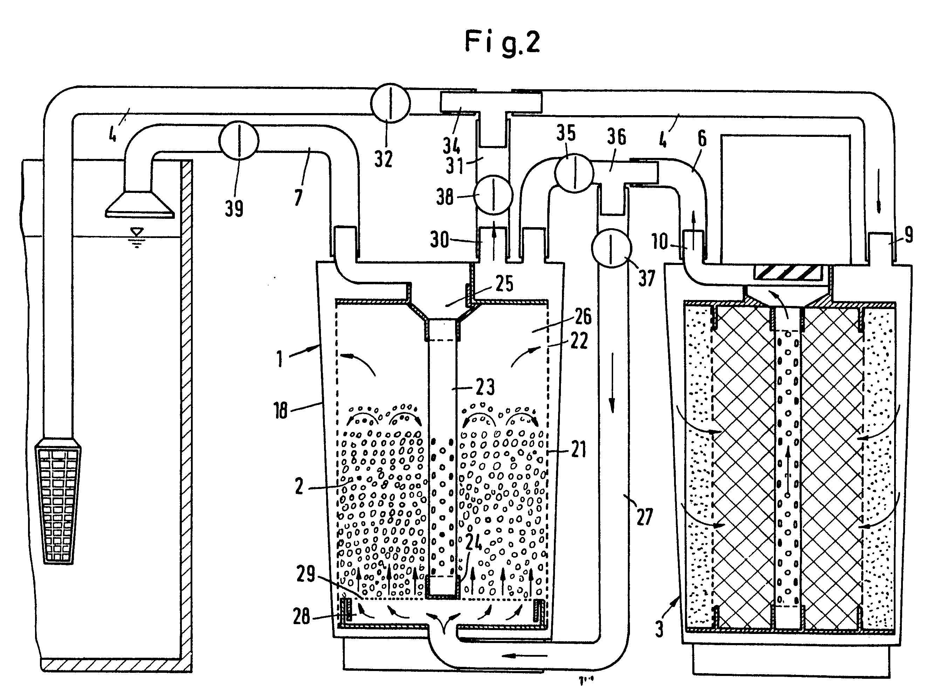

Zur Durchführung des Rückspülvorganges werden gemäß Fig. 2 die beim Reinigungsvorgang geöffneten Ventile 32, 35 und 39 geschlossen und es werden die beiden Ventile 37 und 38 des Rückspülkreislaufs geöffnet. Der Kreislauf wird wiederum durch die Kreiselpumpe 15 in Gang gehalten. Die Strömungsverhältnisse in dem Motorfilter 3 sind die gleichen wie beim Reinigungsvorgang, denn der Motorfilter 3 wird auch während des Rückspülvorgangs zur mechanischen Filterung dienen. Das aus dem Gefäß 8 des Motorfilters 3 über die Zwischenleitung 6 austretende Wasser gelangt jetzt über die Rückspülleitung 7 in den doppelten Boden 28 des Aufnahmegefäßes 1, verteilt sich dort über den gesamten Querschnitt und tritt durch das Sieb 29 in den mit dem Granulat gefüllten Zwischenraum 26 zwischen dem Wellrohr 21 und dem inneren Steigrohr 23 ein. Dabei wird das Granulat von unten nach oben kräftig durchströmt und in Schwebezustand gehalten, wodurch ein intensiver Spülvorgang durchgeführt werden kann. Nach der Spülung dringt das Rückspülwasser durch die Perforation 22 des Wellrohrs nach außen und gelangt über den Anschlußstutzen 30, die Leitung 31 und die Ansaugleitung 4 zurück in den Motorfilter, wo die ausgewaschenen Ausfällungen in dem Motorfilter mechanisch abgefiltert werden.

Die oben beschriebene Vorrichtung, die insbesondere zur Reinhaltung von Aquarienwasser vorgesehen ist, ist nur ein von einer Vielzahl von denkbaren Ausführungsmöglichkeiten.

Das Entfernen der Eiweißrückstände sowie der Eiweißabbauprodukte aus beliebigem zu reinigenden Wasser kann bei Anwendung des erfindungsgemäßen Prinzips auch unabhängig von einem Filtervorgang durchgeführt werden. Wichtig ist lediglich, daß das aus Phthalsäureester enthaltendem PVC bestehende Kontaktmaterial mit dem zu reinigenden Wasser eine bestimmte Zeit lang in Berührung gebracht wird. Das Kontaktmaterial kann daher ebenso gut auch als Tauchkörper ausgebildet sein, der einfach in das zu reinigende Wasser eingetaucht und mit diesem umspült wird.

Ein Vielzahl von Versuchen mit unterschiedlich gearteten Vorrichtungen, bei denen zu reinigendes Wasser durch granulatförmiges, Phthalsäureester enthaltendes PVC geleitet worden ist, hat ausgezeichnete Ergebnisse erbracht.

Beispiel 1

Es wurde ein Durchlaufgefäß mit granulatförmigem Kontaktmaterial gefüllt. Dem aus Phthalsäureester enthaltendem PVC bestehenden Kontaktmaterial waren geringe Mengen Polyäthylen, Kieselgur und Filterkohlepulver beigemischt. Phthalsäureester war in dem PVC mit ca. 33 Gewichtsprozent enthalten. Das zu reinigende Wasser waren 5 Liter Teichwasser, das pro Liter 0,46 mg $NO_2$ und 9,34 mg $NO_3$ enthielt. Das Granulat wurde frisch eingesetzt und 9 Stunden lang mit dem Teichwasser umspült. Danach betrug der Anteil

an NO$_2$ nur noch 0,19 mg/l und der Anteil an NO$_3$ nur noch 2,40 mg/l.

Beispiel 2

Es wurde der gleiche Versuch mit eingearbeitetem Kontaktmaterial gemacht. Nach 2 Stunden war der Anteil an No$_2$ bereits auf 0,17 mg gesunken, um nach 9 Stunden auf einen Anteil von 0,004 mg/l abzufallen. Der Kon-zentrationsverlauf des NO$_3$ verlief etwa in gleicher Weise wie bei dem Versuch mit frischem Granulat.

Beispiel 3

Als Versuchsobjekt dient ein 120 1-Aquarium mit einem Fischbesatz von 300 Pterophyllum scalare (Jungtiere, ca. 2 cm lang). Das Aquariumwasser wurde in einer Menge von 250 l pro Stunde durch ca. 500 cm$^3$ frisches granulatförmiges Kontaktmaterial gepumpt. Das Aquariumwasser enthielt zu Anfang 2,0 mg/l NO$_3$. Dieser Wert sank nach 12 Stunden auf 1,0 mg/l und nach weiteren 12 Stunden auf 0.05 mg/l.

Ähnliche gute Ergebnisse wurden auch bei der Denitrifizierung von Salzwasser erreicht.

**Patentansprüche**

1. Verfahren zum Entfernen von Eiweiß und dessen Abbauprodukten aus Wasser, dadurch gekennzeichnet, daß mit dem zu reinigenden Wasser ein mit einer großen Kontaktfläche versehenes Kontaktmaterial aus Phthalsäure-ester enthaltendem Kunststoff umspült wird und daß das Kontaktmaterial nach bestimmten Zeitabständen gereinigt bzw. durch neues Material ausgetauscht wird.

2. Verfahren nach Anspruch 1, dadurch gekennzeichnet, daß als Kontaktmaterial Phthalsäureester enthaltendes PVC verwendet wird.

3. Verfahren nach Anspruch 2, dadurch gekennzeichnet, daß dem Phthalsäureester enthaltendem PVC Polyäthylen beigemischt ist.

4. Verfahren nach Anspruch 2 oder 3, dadurch gekennzeichnet, daß dem Phthal-säureester enthaltendem PVC Kieselgur beige-mischt ist.

5. Verfahren nach einem der Ansprüche 2 bis 4, dadurch gekennzeichnet, daß dem Phthalsäureester enthaltendem PVC Filterkohlepulver beigemischt ist.

6. Verfahren nach einem der Ansprüche 2 bis 5, dadurch gekennzeichnet, daß granulatförmiges Kontaktmaterial verwendet wird.

7. Verfahren nach Anspruch 6, dadurch gekennzeichnet, daß die Granulatteilchen eine aufgerauhte Oberfläche aufweisen.

8. Vorrichtung zur Durchführung des Verfahrens nach Anspruch 1 mit einem von dem zu reinigenden Wasser durchströmbaren Aufnahmegefäß dadurch gekennzeichnet, daß das Aufnahmegefäß (1) zumindest teilweise mit einem aus Phthalsäureester enthaltendem Kunststoff bestehenden Kontaktmaterial (2) gefüllt ist.

9. Vorrichtung nach Anspruch 8, dadurch gekennzeichnet, daß dem mit dem Kontaktmaterial gefüllten Aufnahmegefäß (1) ein mechanischer Filter (3) vorgeschaltet ist, daß das Aufnahmegefäß (1) und der Filter (3) in einen geschlossenen Kreislauf schaltbar sind und daß die Förderpumpe (15) in einem Leitungsbereich angeordnet ist, der zu dem geschlossenen Kreislauf gehört.

10. Vorrichtung nach Anspruch 9, dadurch gekennzeichnet, daß das Aufnahmegefäß (1) zumindest in der jenigen Schaltstellung, bei welcher es mit dem Filter (3) in einem geschlossenen Kreislauf liegt, den Wassereinlaß in seinem unteren Bereich aufweist.

11. Vorrichtung zur Durchführung des Verfahrens nach Anspruch 1, gekennzeichnet durch einen mit großer Oberfläche versehenen Tauchkörper, der zumindest an seiner Oberfläche aus Phthalsäureester enthaltendem Kunststoff besteht.

**Revendications**

1. Procédé pour débarrasser l'eau de l'albumine et de ses produits de dégradation, caractérisé en ce qu'une matière de contact faite d'une matière synthétique contenant un ester de l'acide phtalique et dotée d'une grande surface de contact est balayée tout autour par un courant de l'eau à épurer et en ce qu'à intervalles de temps déterminés, la matière de contact est nettoyée ou remplacée par une matière fraîche.

2. Procédé selon la revendication 1, caractérisé en ce qu'on utilise, comme matière de contact, un PVC contenant un ester de l'acide phtalique.

3. Procédé selon la revendication 2, caractérisé en ce qu'un polyéthylène est ajouté au PVC contenant un ester de l'acide phtalique.

4. Procédé selon la revendication 2 ou 3, caractérisé en ce qu'une terre d'infusoires est ajoutée au PVC contenant un ester de l'acide phtalique.

5. Procédé selon l'une quelconque des revendications 2 à 4, caractérisé en ce qu'une poudre de charbon à filtrer est ajoutée au PVC contenant un ester de l'acide phtalique.

6. Procédé selon l'une quelconque des revendications 2 à 5, caractérisé en ce qu'on utilise une matière de contact sous forme de granulé.

7. Procédé selon la revendication 6, caractérisé en ce que les particules du granulé présentent une surface rendue rugueuse.

8. Dispositif pour l'exécution du procédé selon la revendication 1, comprenant un récipient de réception qui peut être traversé par un courant de l'eau à épurer, caractérise en ce que le récipient de réception (1) est rempli, au moins en partie, avec une matière de contact (2) faite d'une matière synthétique contenant un ester de l'acide phtalique.

9. Dispostif selon la revendication 8, caractérisé en ce qu'il est disposé un filtre mécanique (3) amont du récipient de réception (1) rempli de la matière de contact, en ce que le récipient de réception (1) et le filtre (3) peuvent être mis en circuit fermé et en ce que la pompe de circulation (15) est disposée dans une partie de la canalisation qui fait partie du circuit fermé.

10. Dispostif selon la revendication 9, caractérisé en ce qu'au moins dans la position de branchement dans laquelle le récipient de réception (1) est en circuit fermé avec le filtre (3), ce récipient (1) présente son admission d'eau dans sa partie inférieure.

11. Dispositif pour l'exécution du procédé selon la revendication 1, caractérisé par un corps à immersion doté d'une grande surface qui est fait, au moins à sa surface, d'une matière synthétique contenant un ester de l'acide phtalique.

**Claims**

1. Process for the removal of protein and degradation products thereof from water, characterised in that the water to be purified is caused to flow around a contact material which is provided with a large contact area and consists of a plastic containing phthalic acid ester and that, in defined intervals, the contact material is cleaned or exchanged for new material.

2. Process according to Claim 1, characterised in that the contact material used is PVC containing phthalic acid ester.

3. Process according to Claim 2, characterised in that polyethylene is admixed to the PVC containing phthalic acid ester.

4. Process according to Claim 2 or 3, characterised in that kieselguhr is admixed to the PVC containing a phthalic acid ester.

5. Process according to one of Claims 2 to 4, characterised in that filter carbon powder is admixed to the PVC containing phthalic acid ester.

6. Process according to one of Claims 2 to 5, characterised in that a granular contact material is used.

7. Process according to Claim 6, characterised in that the granular particles have a roughened surface.

8. Equipment for carrying out the process according to Claim 1, having a receiver vessel through which the water to be purified can flow, characterised in that the receiver vessel (1) is filled at least partially with a contact material (2) which consists of a plastic containing phthalic acid ester.

9. Equipment according to Claim 8, characterised in that a mechanical filter (3) is provided upstream of the receiver vessel (1) filled with the contact material, that the receiver vessel (1) and the filter (3) can be connected in a closed circulation and that the conveying pump (15) is located in a line section which belongs to the closed circulation.

10. Equipment according to Claim 9, characterised in that the receiver vessel (1), at least in that connection position in which it is in a closed circulation together with the filter, has the water inlet in its lower region.

11. Equipment for carrying out the process according to Claim 1, characterised by a dip body which is provided with a large surface area and which, at least on its surface, consists of a plastic containing phthalic acid ester.

# Fig.1

0017 888

Fig.2